# EUROPEAN PATENT SPECIFICATION

(11) **EP 1 620 657 B1**
(45) Date of publication and mention of the grant of the patent: **02.03.2011**
(21) Application number: 03723090.1
(22) Date of filing: 06.05.2003
(51) Int. Cl.: F16D 65/12

(54) **CORE ASSEMBLY FOR A BRAKE DISK**
KERNAUFBAU EINER BREMSSCHEIBE
ENSEMBLE CENTRAL POUR FREIN A DISQUE

(43) Date of publication of application: 01.02.2006
(73) Proprietor: Freni Brembo S.p.A., 24035 Curno (Bergamo) (IT)
(72) Inventor: GOLLER, Ralf, Siegfried, I-24124 Bergamo (IT); BONFANTI, Roberto, I-24020 Scanzorosciate (Bergamo) (IT)
(74) Representative: Crippa, Paolo Ernesto
(86) International application number: PCT/IT2003/000272
(87) International publication number: WO 2004/099643

(56) References cited:
- EP-A- 1 108 918
- EP-A- 1 124 074
- EP-A- 1 298 342
- WO-A-02/097292
- GB-A- 1 403 828
- GB-A- 2 144 186
- US-A- 6 086 814
- PATENT ABSTRACTS OF JAPAN vol. 1996, no. 03, 29 March 1996 (1996-03-29) & JP 07 308752 A (AHRESTY CORP), 28 November 1995 (1995-11-28)
- PATENT ABSTRACTS OF JAPAN vol. 007, no. 133 (M-221), 10 June 1983 (1983-06-10) & JP 58 049545 A (TAKAOKA KOGYO KK), 23 March 1983 (1983-03-23)

## Description

This invention relates to a core assembly for the manufacture of a brake disc provided with two rotor plates separated by ventilation ducts and a process for obtaining a brake disc using the said core assembly.
Core assemblies are known from EP-A-1 298 342, WO 02/097292 and Patent Abstracts of Japan vol. 007, no.133 (M-221) JP 58 049545, representing the closest prior art.

In particular this invention relates to a core assembly for the manufacture of a braking surface for a brake disc having ventilation ducts and constructed of a ceramic material such as, for example, C/SiC.

The manufacture of ventilation ducts in braking bands as solid bodies using a mould and a core and then subsequently making holes, generally lying in the plane midway through the thickness of the band and comprising the ventilation ducts or channels, is known in the art. This process gives rise to a number of problems and disadvantages associated with technological difficulties. In particular, making of the holes in the thickness of the braking band is very expensive and difficult because of the hardness of the materials used.

In addition to this, mechanical machining within the thickness of the braking band is difficult to control in comparison with machining the exterior of the braking band. As a consequence, in the course of internal machining it is not possible to rule out the formation of sharp edges or even cracks, due for example to chipping of the material during machining to remove turnings, which cannot be accepted in the manufacture of a braking band, especially if the braking band is manufactured from a particularly hard and brittle material such as for example a ceramic compound.

The problem in this invention is that of providing a core for the manufacture of braking bands which have characteristics such as to satisfy the abovementioned requirements and at the same time to overcome the disadvantages occurring in the known art.

These disadvantages and restrictions are effectively overcome by a core assembly according to Claim 1.

Other embodiments of the core assembly are described in the subsequent claims.

Other advantages and characteristics of the present invention will become clear from the following detailed description which is given with reference to the appended drawings which are provided purely by way of non-limiting example and in which:
Figure 1 represents a perspective view of a core assembly according to one embodiment of the invention,

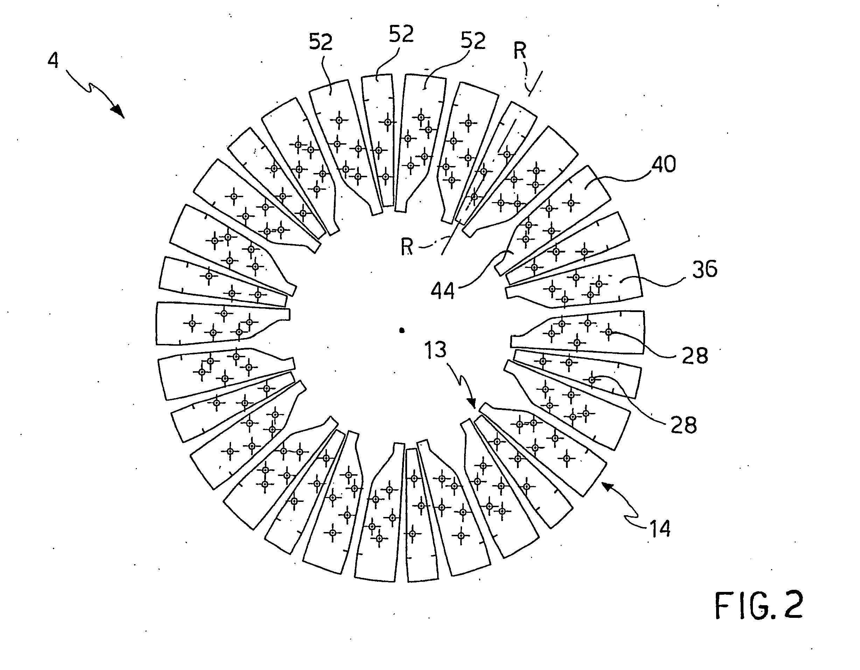

Figure 2 shows a plan view of the core assembly in Figure 1 from above,

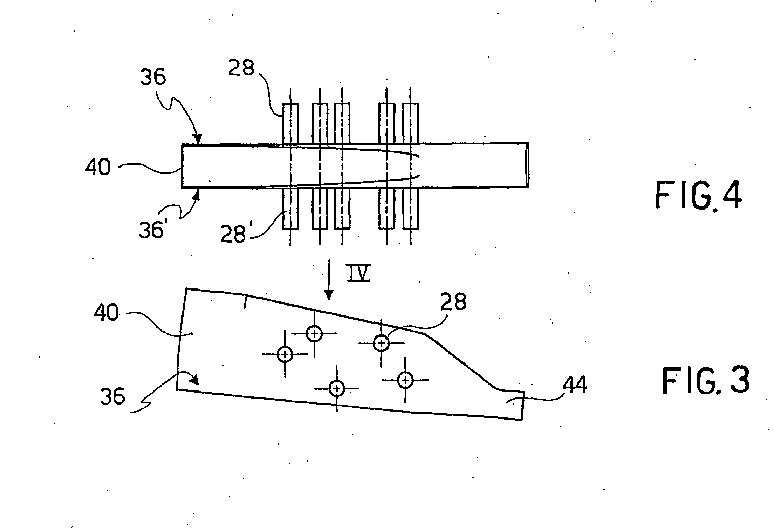

Figure 3 illustrates a magnified detail of a core in the core assembly in Figure 1,
Figure 4 shows a view of the detail in Figure 3 from the side of arrow IV in Figure 3,
Figure 5 shows a perspective view of a semi-finished product obtained by moulding using the core assembly in Figure 1,

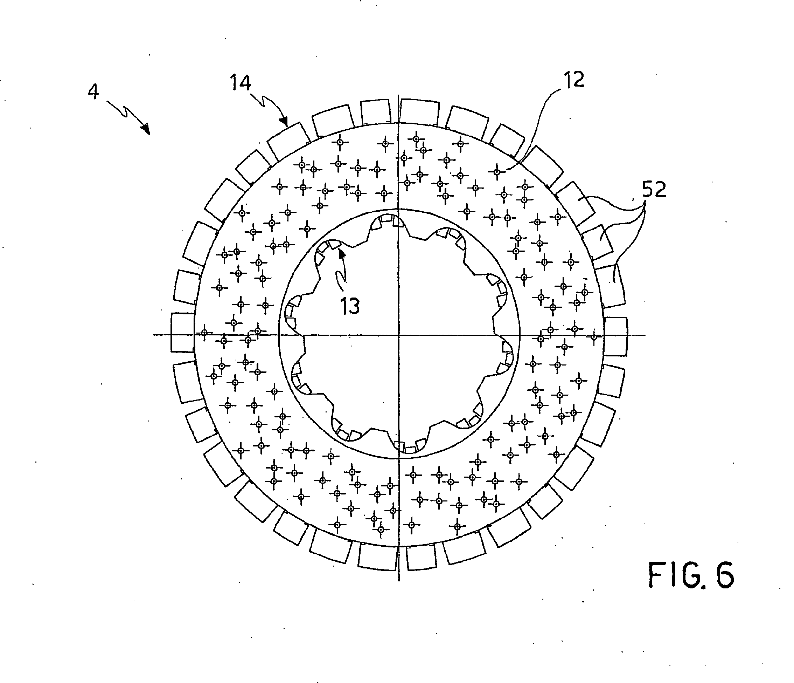

Figure 6 shows a plan view of the semi-finished product in Figure 5 from above,

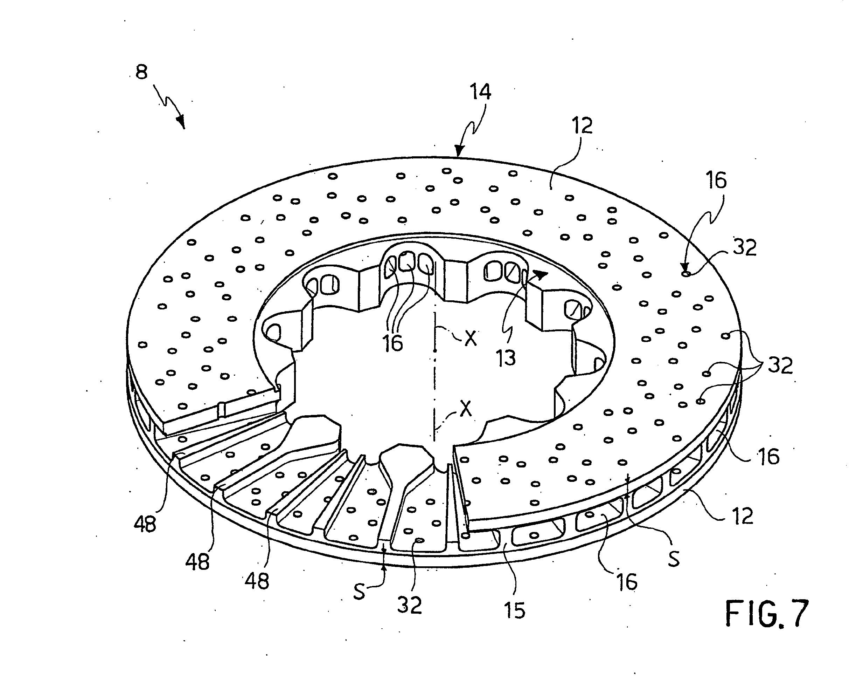

Figure 7 shows a perspective view in partial cross-section of a brake disc obtained using the core assembly in Figure 1,
Figure 8 shows a perspective view of a core assembly according to another embodiment of this invention,

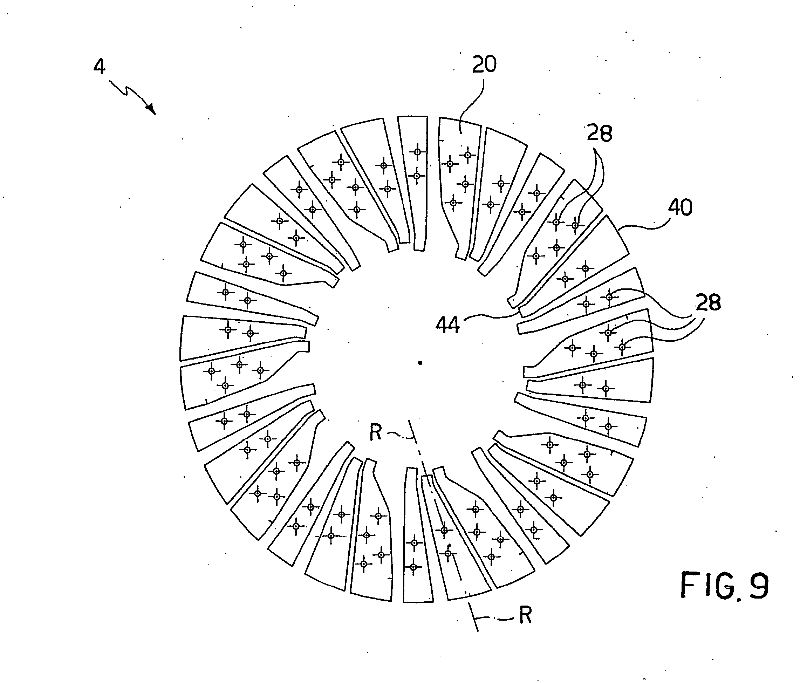

Figure 9 shows a plan view of the core assembly in Figure 8 from above,
Figure 10 shows a plan view of a core assembly according to another embodiment from above, and
Figure 11 shows a plan view of a core assembly according to another embodiment of the invention from above.
Components or parts which are common to the embodiments described below will be indicated using the same numerical references.

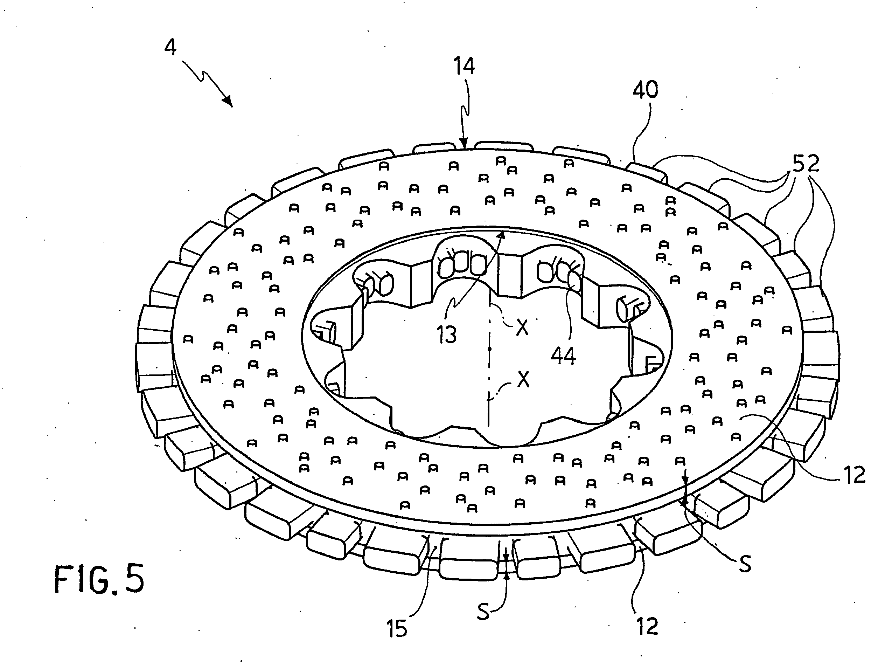

With reference to the abovementioned figures, 4 generically indicates a core assembly for a brake disc designed to be inserted into a mould for manufacturing a brake disc 8 having two rotor plates 12 with a predefined axis X, as illustrated for example in Figure 5, of a predetermined thickness S. The said plates extend radially from an inner edge 13 to an outer edge 14 and are separated from each other by a central layer 15 incorporating ventilation ducts or channels 16.

Core assembly 4 comprises at least one core 20 provided with a core body 24 which extends substantially from said inner edge 13 to said outer edge 14 and which is designed to produce a ventilation duct capable of providing a passage for the flow of a fluid through the central layer 15 and therefore between plates 12, the said fluid flowing for example radially between the inner edge and the outer edge.

According to one embodiment, the core assembly comprises a plurality of cores 20 which extend in a preferably substantially radial direction, that is passing through predetermined axis X.

Core body 24 advantageously comprises at least one protuberance 28, which projects from said core body 24 along an axis P, which according to one embodiment is substantially parallel to the said axis X. The said at least one protuberance 28 is designed to produce a cavity 32 in a plate 12. Preferably the said cavity 32 is substantially directed parallel to the predefined axis X of plate 12. Preferably said cavity 32 is in fluid communication with the ventilation duct.

According to one embodiment, the said at least one protuberance 28 is designed to produce a cavity 32 having a depth which is less than the said predetermined thickness S of plates 12. According to one embodiment, the said at least one protuberance 28 is designed to produce a cavity 32 having a depth which is equal to at least the said predetermined thickness S of plates 12. According to another embodiment, said core body 24 has a pair of bases 36 which are substantially flat and perpendicular to predetermined axis X of plates 12, said bases 36 enclosing a thickness of the said core body 24 along a direction substantially parallel to predetermined axis X.

Preferably at least one protuberance 28 projects from at least one of said bases 36, and perpendicularly thereto. According to a preferred embodiment, said protuberances 28 project from both said bases 36, and perpendicularly thereto.

Preferably, said protuberances 28 are distributed in a mirror-image arrangement on said bases 36 in such a way that each protuberance 28 on one of said bases 36 corresponds to an opposite protuberance 28' in opposite base 36'.

According to another embodiment the said at least one core body 24 comprises a first end 40, designed to form the said outer edge 14 of said plates 12 and a second end 44 designed to form said inner edge 13 of said plates 12, the said second end 44 being opposite to and tapered with respect to first end 40 so as to form a ventilation duct 16 which tapers from outer edge 14 to inner edge 13 of plates 12.

According to another embodiment, the said at least one core body 24 has a transverse cross-section in a plane parallel to the said predetermined axis X which tapers from first end 40 towards second end 44 in such a way as to form connecting walls 48 having a substantially constant transverse cross-section between resulting plates 12.

According to another embodiment, the said at least one core body 24 has a substantially oval shape in transverse cross-section.

According to another embodiment, the said at least one core body 24 has a substantially quadrangular shape in transverse cross-section.

Preferably, said protuberances 28 have a substantially cylindrical shape with a circular base designed to produce cavities in corresponding plates 12.

According to another embodiment, said protuberances 28 have a substantially cylindrical shape with an elliptical base designed to produce cavities in corresponding plates 12.

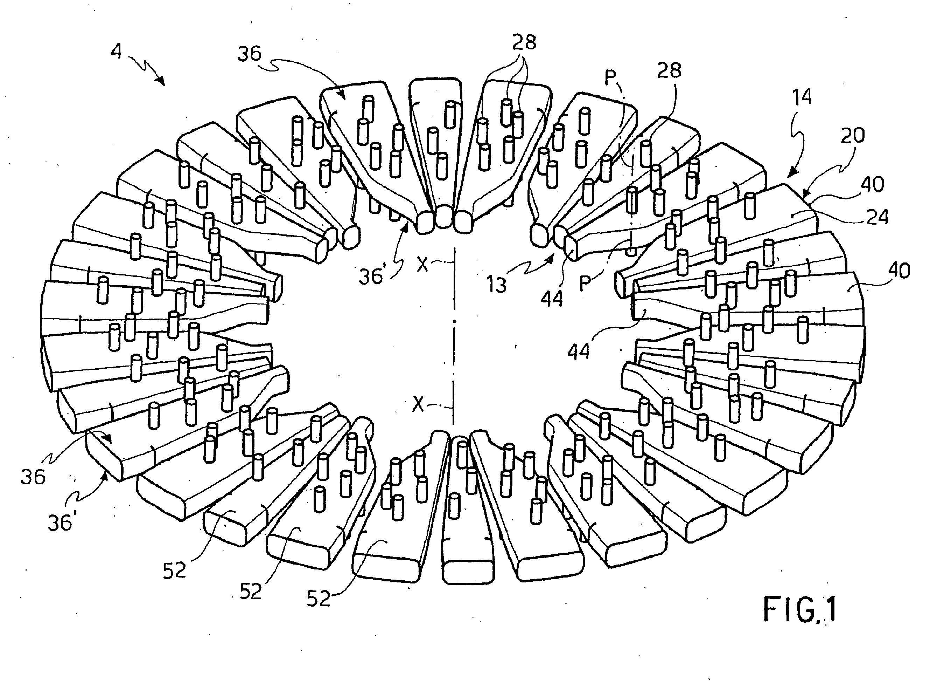

Said core body 24, as illustrated for example in Figure 1, is substantially straight in a preferential direction R perpendicular to said predetermined axis X and is located parallel to a radial direction of the corresponding plates in such a way as to form a substantially radial ventilation duct 16.

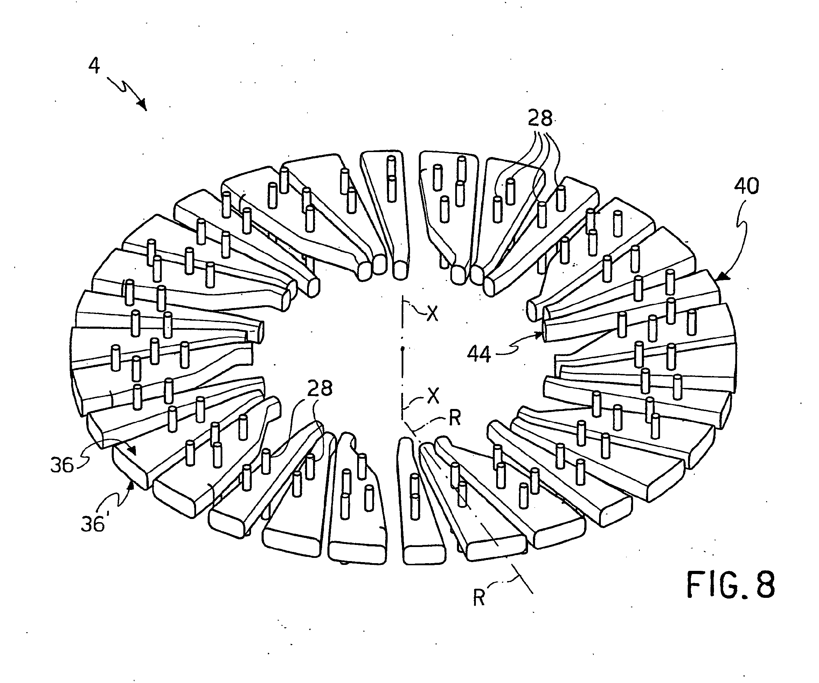

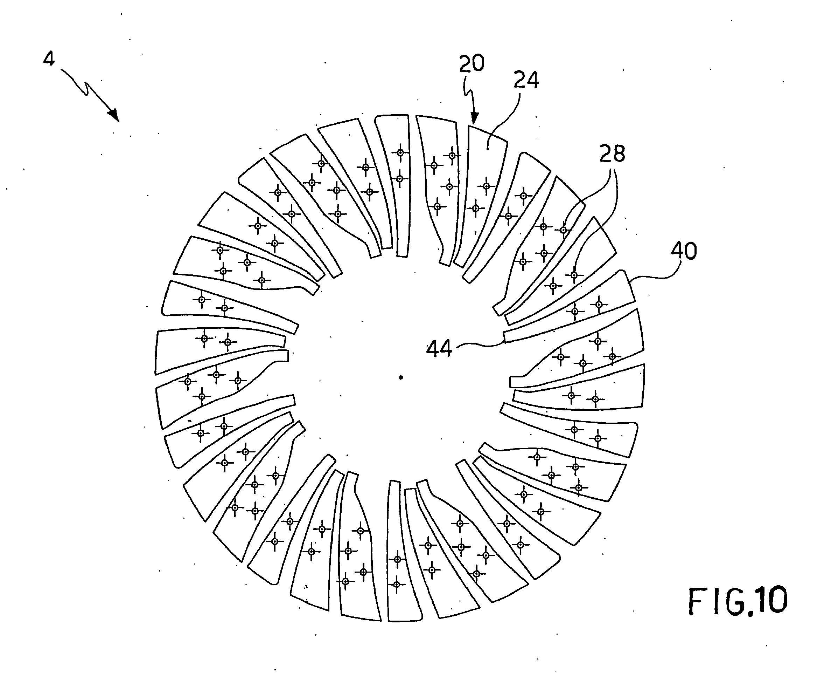

According to another embodiment, illustrated for example in Figure 8, said core body 24 is substantially directed along a preferential direction R perpendicular to said predetermined axis X and incident with respect to a radial direction of the resulting plates in such a way as to form a ventilation duct 16 which is substantially inclined with respect to the said radial direction. According to another embodiment, illustrated for example in Figure 10, the at least one core body 24 has a substantially curved shape, forming a substantially curved ventilation duct 16 between plates 12. Advantageously, said at least one core body 24 comprises a core-holder 52 corresponding to said first and second end 40,44 designed to offer support and positioning for core body 24 in a corresponding mould.

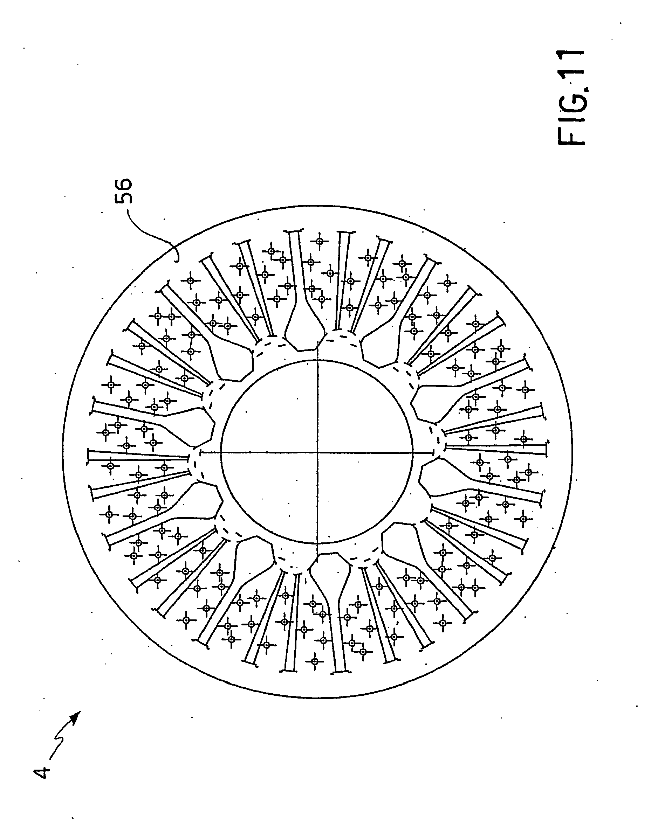

Advantageously, core assembly 4 comprises a crown 56 joining the cores, illustrated for example in Figure 11, which connects cores 20 together in such a way as to make cores 20 which constitute core assembly 4 of one piece with each other.

Preferably said joining crown 56 joins cores 20 at said first and second ends 40,44. Preferably core 20 is constructed of a material which melts. In this way the molten material of the core can be discharged from the mould during the process of moulding to manufacture the disc, with spaces forming ventilation channels 16 remaining in its place. Preferably core 20 is constructed of a material which melts in a specific temperature range. Preferably core 20 is made of a material which melts at a temperature below the pyrolysis temperature.

The process for forming the braking band of the brake disc through the use of a forming mould will now be described.

The said mould, which is not illustrated, comprises two plates which under operating conditions are joined together in such a way as to bound a forming cavity. The plates are operated for example by pistons which can move along an axis X-X which coincides with the predetermined axis of plates 12.

Initially, when the mould is in the open configuration, or when the two plates are at a distance from each other, a layer of a mixture in the solid state is deposited in the forming cavity.

Typically said mixture of the layer in the solid state comprises fibres and/or filaments of carbon-based materials selected from the group comprising fibrous materials obtained by the pyrolysis of various products of synthetic origin.

These materials are mixed with a binder such as, for example, a phenolic resin, an acrylic resin, or the like. The binder can be added to the mixture in any desired form, for example in the solid, semi-liquid or liquid state or in solution.

The mixture may also contain other additives conventionally used as fillers and, indirectly, for the purpose of controlling the porosity and density of the desired composite material.

Core assembly 4 is then positioned above the layer in such a way as to cover it and at the same time in such a way as to be held suspended and not sink into the mixture. This suspension is preferably achieved through the core's core-holder.

After the core has been positioned within the forming cavity another layer of the aforesaid mixture is deposited on the core in such a way as to produce stratification; at this point the mould can be closed. The braking band is formed through a first heating at a temperature and pressure exerted by the pistons on the layers of mixture such as to cause hardening of the layers so that they take up a three-dimensional structure.

By the term three-dimensional structure, referring to the material which will form the braking band of this invention, it is meant that this material has a conformation such that it will not collapse on itself at the temperature at which the core begins to melt. Typically the said first heating is effected at a temperature of between 80 and 180°C. The semi-finished product so obtained is then removed from then corresponding mould and placed in a furnace of the conventional type.

In the said furnace the said semi-finished product is subjected to a further heating at a temperature such as to melt the core. Once molten, the material, for example a metal, comprising the core is collected in a melting pot for re-use. This molten material is discharged from the porosities or suitable channels, suitably orientating the semi-finished product.

This second heating is performed at a temperature which depends substantially on the type of metal forming the core.

For example in the case of a core of tin-based alloy, this second heating temperature preferably lies between 150 and 250°C, even more preferably between 180 and 220°C, while when the core is a zinc-based alloy this second heating temperature preferably lies between 250 and 450, even more preferably between 300 and 400°C.

The said second heating results in a semi-finished product comprising ventilation channels corresponding to the empty space left when molten core assembly 4 flows out. In particular, after the second heating the semi-finished product comprises both radial and axial ventilation channels as a result of the use of a core body having a substantially radial extent and protuberances which project axially.

At the end of the second heating the semi-finished product may be treated in accordance with the known art for the manufacture of braking bands.

Typical examples of the said treatments are pyrolysis and silicification. Preferably these are carried out as described in the Applicant's European Patent Application No. 00830093.1 regards the aforesaid pyrolysis and silicification treatments, in which the pyrolysis takes place at a temperature of between 900 and 1200°C in the presence of a flow of inert gas such as nitrogen and argon and with an excess pressure of 10-100 mbar and silicification is carried out at a temperature of 1400-1700°C under vacuum reducing the pressure from 900 mbar to 300 mbar.

In addition to this, if necessary, the braking band according to the invention so obtained may be subjected to finishing operations, for example surface finishing, which may be carried out dry or wet in a conventional manner using a grinding operation.

In addition to this, it is known that in some cases braking bands manufactured from the materials described above can give rise to possible cracks or fractures following thermal and/or compression stresses to which a braking band is subjected when in use. Said cracks or fractures tend to propagate rapidly throughout the structure of a braking band and may cause its complete disintegration.

Advantageously, it is possible to introduce a plurality of reinforcing fibres so as to prevent the propagation of cracks into the mixture for forming the braking band described above.

Examples of the said reinforcing fibres and their incorporation in the mixture which will form the braking band are described in the Applicant's European Patent Application No. 00830093.1 as regards the aforesaid reinforcing fibres and their incorporation.

In addition to this, braking band 8 has an outer edge with openings corresponding to the ventilation ducts described above and an inner edge provided with seats for housing corresponding teeth of a brake disc hub (not shown).

As may be seen from what has been described, the core assembly according to the invention makes it possible to overcome the disadvantages presented by moulds of the known art.

In fact, the core assembly disclosed makes it possible to produce braking bands with radial and axial ventilation ducts rapidly and economically.

The axial ventilation ducts are formed from the cavities generated by the protuberances and are in fluid communication with the radial ducts.

The axial ducts are not therefore obtained by drilling operations and therefore there is no risk of creating unacceptable cracks in the plates.

The presence of a core-holder provides appropriate support for the core assembly and at the same time an optimum balancing of the pressures exerted on the mould during the stage of forming the braking band.

This invention also relates to a simple and economic process which makes it possible to obtain a braking band with the necessary safety characteristics from the structural point of view which is easy to manufacture.

In addition to this the advantages of the process for producing the braking band according to this invention will be immediately apparent from what has been said above.

One advantage is that the core, from which the ventilation channels in the braking band according to this invention are obtained, is made of a material which is able to begin to melt at a temperature at which the material which will form the braking band has already adopted a three-dimensional structure. This makes it possible to form the ventilation ducts without causing collapse of the braking band which is being formed on the core.

Naturally, the principle of the invention remaining the same, the forms of embodiment and details of construction may be varied widely with respect to those described and illustrated, which have been given purely by way of example, without thereby departing from the scope of the invention.

## Claims

1. A core assembly (4) for a disc (8) of ceramic material provided with two rotor plates (12) having a predetermined axis (X), the said plates (12) having radially an inner edge (13) and an outer edge (14), having a predetermined thickness (S) and being separated from each other by a central layer (15) with ventilation ducts (16), the said core assembly (4) being designed to be inserted in a mould and comprising:
at least one core (20), fitted with a core body (24), designed to produce a ventilation duct (16) extending between the said inner edge (13) and the said outer edge (14), in which
the at least one core body (24) comprises at least one protuberance (28) which projects from the said core body (24) and is designed to produce within a plate (12) a cavity (32) which is directly substantially parallel to the predetermined axis (X) of the plate (12),
**characterised in that**
the said protuberances (28) are a plurality of protuberances distributed along the radial direction of each of the at least one core body (24),
the said protuberances (28) have a cylindrical shape designed to produce cavities in the corresponding plates (12) distributed from said inner edge (13) to said outer edge (14) of the plates (12),
the at least one core body (24) is a plurality of core bodies grouped three by three, said group of three bodies having their portions close to the inner edge brought closer to each other to leave a space with the adjoining group greater in respect of the space in-between the bodies of the same group, said space is made to form connecting potions to connect the disc to a hub.

2. A core assembly (4) according to Claim 1, in which the said cavity (32) is in fluid communication with the said ventilation duct (16).

3. A core assembly (4) according to Claim 1 or 2, in which the said at least one protuberance (28) is designed to produce a cavity (32) having a depth less than the said predetermined thickness (S) of the plates (12).

4. A core assembly (4) according to Claim 1 or 2, in which the said at least one protuberance (28) is designed to produce a cavity (32) having a depth at least equal to the said predetermined thickness (S) of the plates (12).

5. A core assembly (4) according to any one of the preceding claims, in which the said core body (24) comprises a pair of bases (36) which are substantially flat and perpendicular to the said predetermined axis (X) of the plates (12), the said bases (36) enclosing a thickness of the said core body along a direction which is substantially parallel to the predetermined axis (X).

6. A core assembly (4) according to Claim 5, in which at least one protuberance (28) projects from at least one of the said bases (36), and perpendicularly thereto.

7. A core assembly (4) according to Claim 5 or 6, in which the said protuberances (28) project from both the said bases (36), and perpendicularly thereto.

8. A core assembly according to Claim 7, in which the said protuberances (28) are distributed in mirror-image form on the said bases (36) in such a way that an opposite protuberance (28') on the opposite base (36') corresponds to each protuberance (28) on one of the said bases (36).

9. A core assembly (4) according to any one of the preceding claims, in which the said at least one core body (24) comprises a first end (40) designed to form the said outer edge (14) of the said plates (12) and a second end (44) designed to form the said inner edge (13) of the said plates (12), the said second end (44) being opposite to and tapered with respect to the first end (40) in such a way as to form a ventilation duct (16) which tapers from the inner edge (13) to the outer edge (14) of the plates (12).

10. A core assembly (4) according to Claim 9, in which the said at least one core body (24) has a transverse cross-section in a plane parallel to the said predetermined axis (X) which tapers from the first end (40) to the second end (44) in such a way as to form connecting walls (48) having a substantially constant transverse cross-section between the resulting plates (12).

11. A core assembly (4) according to any one of the preceding claims, in which the said at least one core body (24) has a substantially oval shape in transverse cross-section.

12. A core assembly (4) in accordance with any one of claims from 1 to 10, in which the said at least one core body (24) has a substantially quadrangular shape in transverse cross-section.

13. A core assembly (4) according to any one of the preceding claims, in which the said core body (24) is substantially directed along a preferential direction (R) perpendicular to the said predetermined axis (X) and located parallel to a radial direction of the resulting plates (12) in such a way as to form a substantially radial ventilation duct (16).

14. A core assembly (4) according to any one of Claims from 1 to 12, in which the said core body (24) is substantially directed along a preferential direction (R) perpendicular to the said predetermined axis (X) and incident with respect to a radial direction of the resulting plates (12) in such a way as to form a ventilation duct (16) which is substantially inclined with respect to the said radial direction.

15. A core assembly (4) according to any one of claims from 1 to 12, in which the at least one core body (24) has a substantially curved shape forming a substantially curved ventilation duct (16) between the plates (12).

16. A core assembly (4) according to any one of the preceding claims, in which the said at least one core body (24) comprises a core-holder (52) designed to provide a support and positioning for the core body (24) in a corresponding mould at the said first and second end (40,44).

17. A core assembly (4) according to any one of the preceding claims, comprising a crown (56) joining the cores (20) which joins the cores (20) together in such a way as to make the cores (20) forming the core assembly (4) of one piece with each other.

18. A core assembly (4) according to Claim 17, in which the said joining crown (56) joins the cores (20) at the said first and second ends (40,44).

19. A brake disc (8) comprising a braking band obtained by a process which uses a core assembly as described in one of claims from 1 to 18.

20. A process for manufacture of a brake disc (8) of composite material, provided with two rotor plates (12) having a predetermined axis (X), using a core assembly according to one of claims 1 to 18, said, process comprising the stages of ;
a) forming a core (20) having a core body (24) designed to form a ventilation duct (16) extending between an inner edge (13) and an outer edge (14) of the said disc, and comprising at least one protuberance (28) which projects from the said core body (24) substantially parallel to the said predetermined axis (X), according to anyone of claim from 1 to 18,
b) inserting the said core in a mould,
c) filling the said mould with at least two layers of material which will form the braking band in such a way that the said core is sandwiched between the said at least two layers.

21. A process for manufacture of a brake disc (8) of composite material obtained through the process in Claim 20, the said process also comprising the stages of:
heating the said mould to a temperature such as to cause hardening of the said at least two layers so that the said at least two layers adopt a three-dimensional structure.

22. A process for manufacture of a brake disc (8) of composite material obtained through the process in Claims 20 or 21, the said process also comprising the stage of:
heating the said mould to a temperature such as to cause melting of the material of the said core.

23. A process for manufacture of a brake disc (8) of composite material obtained through the process in claims from 20 to 22, the said process also comprising the stage of pyrolysis.

24. A process for manufacture of a brake disc (8) of composite material obtained through the process in claims from 20 to 23, the said process also comprising the stage of silicification.

25. A process for manufacture of a brake disc (8) of composite material obtained through the process in claims from 20 to 24, the said process also comprising the stage of surface finishing of the said disc.

26. A process for manufacture of a brake disc (8) of composite material obtained through the process in claims from 20 to 25, in which the said core (20) is of a material which will melt.

27. A process for manufacture of a brake disc (8) of composite material obtained through the process in claims from 20 to 25, in which the said core is of a metal material.

28. A process for manufacture of a brake disc (8) of composite material obtain through the process in claims from 20 to 25, in which the said core (20) is of a metal material which melts at a temperature below the pyrolysis temperature.

29. A process for manufacture of a brake disc (6) of composite material obtained through the process in claims from 20 to 25, in which the said core is a metal alloy capable of melting at a temperature of between 150 and 450°C.

30. Brake disc (8) of composite material provided with two rotor plates (12) having a predeterminal axis, and obtained by a process according to one of claims 20-29.

31. A process for forming a braking band using a core assembly (4) according to Claims 1 to 18, in which said core forms a braking band (8) with an outer edge with openings corresponding to the ventilation ducts and an inner edge provided with seats for housing corresponding teeth of a brake disc hub.

32. A braking band (8) obtained by a process according to claim 31.

## Patentansprüche

1. Eine Kernbaugruppe (4) für eine Scheibe (8) aus keramischen Material bereitgestellt mit zwei Rotorplatten (12) die eine vorbestimmten Achse (X) haben, die Platten (12) haben radial einen inneren Rand (13) und einen äußeren Rand (14), der eine vorbestimmte Dicke (S) hat und voneinander getrennt sind durch eine zentrale Schicht (15) mit Lüftungskanälen (16), die Kernbaugruppe (4) ist entworfen um in eine Form eingesetzt zu werden und weist auf:
zumindest einen Kern (20), ausgestattet mit einem Kernkörper (24), entworfen um einen Lüftungskanal (16) herzustellen, der sich erstreckt zwischen dem inneren Rand (13) und dem äußeren Rand (14), in welchem
der zumindest eine Kernkörper (24) zumindest eine Protuberanz (28) aufweist, die von dem Kernkörper (24) absteht und entworfen ist um innerhalb einer Platte (12) einen Hohlraum (32) herzustellen, der direkt im Wesentlichen parallel ist zu der vorbestimmten Achse (X) von der Platte (12),
**dadurch gekennzeichnet, dass**
die Protuberanzen (28) eine Vielzahl von Protuberanzen sind, verteilt entlang der radialen Richtung von jedem von dem zumindest einem Kernkörper (24),
die Protuberanzen (28) haben eine zylindrische Form, entworfen um Hohlräume in den zugehörigen Platten (12) herzustellen, verteilt von dem inneren Rand (13) zu dem äußeren Rand (14) von den Platten (12), der zumindest eine Kernkörper (24) ist eine Vielzahl von Kernkörpern, gruppiert drei bei drei, die Gruppe aus drei Körpern haben Ihre Anteile nahe an dem inneren Rand, näher aneinander gebracht um einen Platz zu schaffen mit der angrenzenden Gruppe, der größer ist bezüglich des Platzes zwischen den Körpern der selben Gruppe, der Platz wird gemacht um Verbindungsanteile zu bilden um die Scheiben mit einer Nabe zu verbinden.

2. Eine Kernbaugruppe (4) nach Anspruch 1, in welcher der Hohlraum (32) in Flüssigkeitsverbindung mit dem Lüftungskanal (16) ist.

3. Eine Kernbaugruppe (4) nach Anspruch 1 oder 2, in welcher die zumindest eine Protuberanz (28) entworfen ist um einen Hohlraum (32) herzustellen, der eine geringere Tiefe hat als die vorbestimmte Dicke (S) von den Platten (12).

4. Eine Kernbaugruppe (4) nach Anspruch 1 oder 2, in welcher die zumindest eine Protuberanz (28) entworfen ist um einen Hohlraum herzustellen (32), der eine Tiefe hat zumindest gleich der vorbestimmten Dicke (S) von den Platten (12).

5. Eine Kernbaugruppe (4) nach einem der vorstehenden Ansprüche, in welchem der Kernkörper (24) ein Paar von Unterbauten (36) aufweist, die im Wesentlichen flach und senkrecht zu der vorbestimmten Achse (X) von den Platten (12) sind, die Unterbauten (36) umgeben eine Dicke von dem Kernkörper entlang einer Richtung, die im Wesentlichen parallel ist zu der vorbestimmten Achse (X).

6. Eine Kernbaugruppe (4) nach Anspruch 5, in welcher zumindest eine Protuberanz (28) absteht von zumindest einem von den Unterbauten (36), und senkrecht dazu ist.

7. Eine Kernbaugruppe (4) nach Anspruch 5 oder 6, in welcher die Protuberanzen (28) abstehen von beiden von den Unterbauten (36), und senkrecht dazu sind.

8. Eine Kernbaugruppe nach Anspruch 7, in welcher die Protuberanzen (28) in spiegelbildlicher Form verteilt sind an den Unterbauten (36) in solch einer Weise, dass eine gegenüberliegende Protuberanz (28') an dem gegenüberliegenden Unterbau (36') übereinstimmt mit jeder Protuberanz (28) an einem von den Unterbauten (36).

9. Eine Kernbaugruppe (4) nach einem der vorstehenden Ansprüche, in welcher der zumindest eine Kernkörper (24) aufweist ein erstes Ende (40), entworfen um den äußeren Rand (14) zu bilden von den Platten (12) und ein zweites Ende (44), entworfen um den inneren Rand (13) von den Platten (12) zu bilden, das zweite Ende (44) ist gegenüberliegend und verjüngt bezüglich des ersten Endes (40), in solch einer Weise, dass ein Lüftungskanal (16) gebildet werden kann, der sich verjüngt von dem inneren Rand (13) zu dem äußeren Rand (14) von den Platten (12).

10. Eine Kernbaugruppe (4) nach Anspruch 9, in welcher der zumindest eine Kernkörper (24) einen transversalen Querschnitt hat in einer Ebene parallel zu der vorbestimmten Achse (X), die sich verjüngt von dem ersten Ende (40) zu dem zweiten Ende (44), in solch einer Weise dass Verbindungswände (48) geformt werden können mit einem im Wesentlichen konstanten transversalen Querschnitt zwischen den resultierenden Platten (12).

11. Eine Kernbaugruppe (4) nach einem der vorstehenden Ansprüche, in welcher der zumindest eine Kernkörper (24) eine im Wesentlichen ovale Form im transversalen Querschnitt hat.

12. Eine Kernbaugruppe (4) nach einem der Ansprüche von 1 bis 10, in welcher der zumindest eine Kernkörper (24) eine im Wesentlichen viereckige Form im transversalen Querschnitt hat.

13. Eine Kernbaugruppe (4) nach einem der vorstehenden Ansprüche, in welcher der Kernkörper (24) im Wesentlichen ausgerichtet ist entlang einer bevorzugten Richtung (R), senkrecht zu der vorbestimmten Achse (X) und parallel gelegen zu einer radialen Richtung von den resultierenden Platten (12) in solch einer Weise um einen im Wesentlichen radialen Lüftungskanal (16) zu bilden.

14. Eine Kernbaugruppe (4) nach einem der Ansprüche 1 bis 12, in welcher der Kernkörper (24) im Wesentlichen entlang einer bevorzugten Richtung (R) ausgerichtet ist, senkrecht zu der vorbestimmten Achse (X) und einfallend, bezüglich einer radialen Richtung von den resultierenden Platten (12), in solch einer Weise um einen Lüftungskanal (16) zu bilden, der im Wesentlichen geneigt ist bezüglich der radialen Richtung.

15. Eine Kernbaugruppe (4) nach einem der Ansprüche 1 bis 12, in welcher der zumindest eine Kernkörper (24) eine im Wesentlichen gebogene Form hat, die einen im Wesentlichen gebogenen Lüftungskanal (16) zwischen den Platten (12) bildet.

16. Eine Kernbaugruppe (4) nach einem der vorstehenden Ansprüche, in welcher der zumindest eine Kernkörper (24) einen Kernhalter (52) aufweist, entworfen um einen Halt und Führung für den Kernkörper (24) bereitzustellen, in einer übereinstimmenden Form an dem ersten und zweiten Ende (40, 44).

17. Eine Kernbaugruppe (4) nach einem der vorstehenden Ansprüche, aufweisend eine Krone (56), die die Kerne (20) zusammenfügt, die die Kerne (20) in solch einer Weise zusammenfügt um die Kerne (20) die Kernbaugruppe (4) in einem Stück miteinander bilden zu lassen.

18. Eine Kernbaugruppe (4) nach Anspruch 17, in welcher die Verbindungskrone (56) die Kerne (20) an den ersten und zweiten Enden (40, 44) zusammenfügt.

19. Eine Bremsscheibe (8) aufweisend ein Bremsband, erhalten durch einen Prozess, der eine Kernbaugruppe benutzt, wie in einem der Ansprüche 1 bis 18 beschrieben.

20. Ein Verfahren zum Herstellen einer Bremsscheibe (8) aus Verbundmaterial, bereitgestellt mit 2 Rotorplatten (12), die eine vorbestimmte Achse (X) haben, unter Verwendung einer Kernbaugruppe nach einem der Ansprüche 1 bis 18, der Prozess weist die Schritte auf:
a) Bilden eines Kerns (20), der einen Kernkörper (24) hat, entworfen um einen Lüftungskanal (16) zu bilden, der sich zwischen einem inneren Rand (13) und einem äußeren Rand (14) von der Scheibe erstreckt, und zumindest eine Protuberanz (28) aufweist, die von dem Kernkörper (24) im Wesentlichen parallel zu der vorbestimmten Achse (X) absteht, nach jedem der Ansprüche 1 bis 18,
b) Einsetzen des Kerns in eine Form,
c) Auffüllen der Form mit zumindest zwei Materialschichten, welche das Bremsband in solch einer Weise bildet, dass der Kern zwischen den zumindest zwei Schichten eingeschlossen ist.

21. Ein Verfahren zum Herstellen einer Bremsscheibe (8) aus Verbundmaterial, erhalten durch das Verfahren in Anspruch 20, das Verfahren weist auch die Schritte auf:
Erhitzen der Form auf eine Temperatur, so dass Erhärtung von den zumindest zwei Schichten erreicht wird, so dass die zumindest zwei Schichten eine dreidimensionale Struktur annehmen.

22. Ein Verfahren zum Herstellen einer Bremsscheibe (8) aus Verbundmaterial, erhalten durch das Verfahren in Anspruch 20 oder 21, das Verfahren weist auch den Schritt auf:
Erhitzen der Form auf eine Temperatur, um das Material von dem Kern schmelzen zu lassen.

23. Ein Verfahren zum Herstellen einer Bremsscheibe (8) aus Verbundmaterial, erhalten durch das Verfahren in Anspruch 20 bis 22, das Verfahren weist auch den Pyrolyseschritt auf.

24. Ein Verfahren zum Herstellen einer Bremsscheibe (8) aus Verbundmaterial, erhalten durch das Verfahren in Anspruch 20 bis 23, das Verfahren weist auch den Verkieselungsschritt auf.

25. Ein Verfahren zum Herstellen einer Bremsscheibe (8) aus Verbundmaterial, erhalten durch das Verfahren in Anspruch 20 bis 24, das Verfahren weist auch den Oberflächenveredlungsschritt der Scheibe auf.

26. Ein Verfahren zum Herstellen einer Bremsscheibe (8) aus Verbundmaterial, erhalten durch das Verfahren in Anspruch 20 bis 25, in welchem der Kern (20) aus einem Material ist das schmilzt.

27. Ein Verfahren zum Herstellen einer Bremsscheibe (8) aus Verbundmaterial, erhalten durch das Verfahren in Anspruch 20 bis 25, in welchem der Kern aus einem metallischen Material ist.

28. Ein Verfahren zum Herstellen einer Bremsscheibe (8) aus Verbundmaterial, erhalten durch das Verfahren in Anspruch 20 bis 25, in welchem der Kern (20) aus einem metallischen Material ist das bei einer Temperatur unterhalb der Pyrolyse-Temperatur schmilzt.

29. Ein Verfahren zum Herstellen einer Bremsscheibe (8) aus Verbundmaterial, erhalten durch das Verfahren in Anspruch 20 bis 25, in welchem der Kern eine Metalllegierung ist, fähig um bei einer Temperatur zwischen 150 und 450°C zu schmelzen.

30. Bremsscheibe (8) aus Verbundmaterial bereitgestellt mit zwei Rotorplatten (12), die eine vorbestimmte Achse haben und erhalten durch ein Verfahren nach einem der Ansprüche 20-29.

31. Ein Verfahren zum Bilden eines Bremsbandes unter Verwendung einer Kernbaugruppe (4) nach Ansprüchen 1 bis 18 in welchem der Kern ein Bremsband (8) bildet mit einem äußeren Rand mit Öffnungen, die mit den Lüftungskanälen übereinstimmen und einem inneren Rand, bereitgestellt mit Sitze zum Aufnehmen von entsprechenden Zähnen von einer Bremsscheibennabe.

32. Ein Bremsband (8) erhalten durch ein Verfahren nach Anspruch 31.

## Revendications

1. Ensemble de coeur (4) pour un disque (8) en matériau céramique, muni de deux plaques de rotor (12) ayant un axe prédéterminé (X), lesdites plaques (12) comportant, de façon radiale, un bord intérieur (13) et un bord extérieur (14), ayant une épaisseur prédéterminée (S) et étant séparées l'une de l'autre par une couche centrale (15) avec des conduits de ventilation (16), ledit ensemble de coeur (4) étant conçu de façon à être inséré dans un moule, et comprenant :
au moins un coeur (20), muni d'un corps de coeur (24), conçu de façon à produire un conduit de ventilation (16) s'étendant entre ledit bord intérieur (13) et ledit bord extérieur (14), dans lequel :
le au moins un corps de coeur (24) comprend au moins une protubérance (28) qui fait saillie à partir dudit corps de coeur (24) et qui est conçue pour produire à l'intérieur d'une plaque (12) une cavité (32) qui est directement sensiblement parallèle à l'axe prédéterminé (X) de la plaque (12),
**caractérisé en ce que** :
les protubérances (28) sont constituées d'une pluralité de protubérances réparties le long de la direction radiale de chacun des au moins un corps de coeur (24),
lesdites protubérances (28) ont une forme cylindrique conçue de façon à produire des cavités dans les plaques correspondantes (12), réparties dudit bord intérieur (13) audit bord extérieur (14) des plaques (12),
le au moins un corps de coeur (24) est constitué d'une pluralité de corps de coeur groupés trois par trois, lesdits groupes de trois corps ayant leurs parties proches du bord intérieur qui sont rapprochées les unes des autres de façon à laisser un espace avec le groupe jointif qui est plus grand que l'espace entre les corps du même groupe, ledit espace étant réalisé de façon à former des parties de liaison pour relier le disque à un moyeu.

2. Ensemble de coeur (4) selon la revendication 1, dans lequel ladite cavité (32) est en communication de fluide avec ledit conduit de ventilation (16).

3. Ensemble de coeur (4) selon la revendication 1 ou 2, dans lequel ladite au moins une protubérance (28) est conçue de façon à produire une cavité (32) ayant une profondeur inférieure à ladite épaisseur prédéterminée (S) des plaques (12).

4. Ensemble de coeur (4) selon la revendication 1 ou 2, dans lequel ladite au moins une protubérance (28) est conçue de façon à produire une cavité (32) ayant une profondeur au moins égale à ladite épaisseur prédéterminée (S) des plaques (12).

5. Ensemble de coeur (4) selon l'une quelconque des revendications précédentes, dans lequel ledit corps de coeur (24) comprend une paire de bases (36) qui sont sensiblement plates et perpendiculaires audit axe prédéterminé (X) des plaques (12), lesdites bases (36) renfermant une épaisseur dudit corps de coeur le long d'une direction qui est sensiblement parallèle à l'axe prédéterminé (X).

6. Ensemble de coeur (4) selon la revendication 5, dans lequel au moins une protubérance (28) fait saillie à partir d'au moins l'une desdites bases (36), et perpendiculairement à celle-ci.

7. Ensemble de coeur (4) selon la revendication 5 ou 6, dans lequel lesdites protubérances (28) font saillie à partir desdites deux bases (36), et perpendiculairement à celles-ci.

8. Ensemble de coeur selon la revendication 7, dans lequel lesdites protubérances (28) sont réparties sous une forme d'image de miroir sur lesdites bases (36) de telle sorte qu'une protubérance opposée (28') sur la base opposée (36') corresponde à chaque protubérance (28) sur l'une desdites bases (36).

9. Ensemble de coeur (4) selon l'une quelconque des revendications précédentes, dans lequel ledit au moins un corps de coeur (24) comprend une première extrémité (40) conçue de façon à former ledit bord extérieur (14) desdites plaques (12) et une deuxième extrémité (44) conçue de façon à former ledit bord intérieur (13) desdites plaques (12), ladite deuxième extrémité (44) étant opposée à la première extrémité (40) et effilée par rapport à celle-ci de façon à former un conduit de ventilation (16) qui s'effile du bord intérieur (13) au bord extérieur (14) des plaques (12).

10. Ensemble de coeur (4) selon la revendication 9, dans lequel ledit au moins un corps de coeur (24) a une section transversale dans un plan parallèle audit axe prédéterminé (X) qui s'effile de la première extrémité (40) à la deuxième extrémité (44) de façon à former des parois de liaison (48) ayant une section transversale sensiblement constante entre les plaques résultantes (12).

11. Ensemble de coeur (4) selon l'une quelconque des revendications précédentes, dans lequel ledit au moins un corps de coeur (24) a une forme sensiblement ovale en section transversale.

12. Ensemble de coeur (4) selon l'une quelconque des revendications 1 à 10, dans lequel ledit au moins un corps de coeur (24) a une forme sensiblement quadrangulaire en section transversale.

13. Ensemble de coeur (4) selon l'une quelconque des revendications précédentes, dans lequel ledit corps de coeur (24) est sensiblement dirigé le long d'une direction préférentielle (R) perpendiculaire audit axe prédéterminé (X) et située parallèlement à une direction radiale des plaques résultantes (12), de façon à former un conduit de ventilation sensiblement radial (16).

14. Ensemble de coeur (4) selon l'une quelconque des revendications 1 à 12, dans lequel ledit corps de coeur (24) est sensiblement dirigé le long d'une direction préférentielle (R) perpendiculaire audit axe prédéterminé (X) et incidente par rapport à une direction radiale des plaques résultantes (12), de façon à former un conduit de ventilation (16) qui est sensiblement incliné par rapport à ladite direction radiale.

15. Ensemble de coeur (4) selon l'une quelconque des revendications 1 à 12, dans lequel le au moins un corps de coeur (24) a une forme sensiblement incurvée formant un conduit de ventilation sensiblement incurvé (16) entre les plaques (12).

16. Ensemble de coeur (4) selon l'une quelconque des revendications précédentes, dans lequel ledit au moins un corps de coeur (24) comprend un support de coeur (52) conçu de façon à assurer un support et un positionnement pour le corps de coeur (24) dans un moule correspondant auxdites première et deuxième extrémités (40, 44).

17. Ensemble de coeur (4) selon l'une quelconque des revendications précédentes, comprenant une couronne (56) reliant les coeurs (20), qui relie les coeurs (20) entre eux de façon à faire former par les coeurs (20) l'ensemble de coeur (4) d'un seul tenant les uns avec les autres.

18. Ensemble de coeur (4) selon la revendication 17, dans lequel ladite couronne de liaison (56) relie les coeurs (20) auxdites première et deuxième extrémités (40, 44).

19. Disque de frein (8), comprenant une bande de freinage obtenue par un procédé qui utilise un ensemble de coeur selon l'une des revendications 1 à 18.

20. Procédé pour la fabrication d'un disque de frein (8) en matériau composite, muni de deux plaques de rotor (12) ayant un axe prédéterminé (X), utilisant un ensemble de coeur selon l'une des revendications 1 à 18, ledit procédé comprenant les étapes consistant à :
a) former un coeur (20) comportant un corps de coeur (24) conçu de façon à former un conduit de ventilation (16) s'étendant entre un bord intérieur (13) et un bord extérieur (14) dudit disque, et comprenant au moins une protubérance (28) qui fait saillie à partir dudit corps de coeur (24) sensiblement parallèlement audit axe prédéterminé (X), selon l'une quelconque des revendications 1 à 18,
b) insérer ledit coeur dans un moule,
c) remplir ledit moule avec au moins de couches de matériau qui formeront la bande de freinage, de telle sorte que ledit coeur soit pris en sandwich entre lesdites au moins deux couches.

21. Procédé pour la fabrication d'un disque de frein (8) en matériau composite obtenu à l'aide du procédé selon la revendication 20, ledit procédé comprenant également les étapes consistant à :
chauffer ledit moule à une température telle qu'elle provoque le durcissement desdites au moins deux couches, de telle sorte que lesdites au moins deux couches adoptent une structure en trois dimensions.

22. Procédé pour la fabrication d'un disque de frein (8) en matériau composite obtenu à l'aide du procédé selon les revendications 20 ou 21, ledit procédé comprenant également l'étape consistant à :
chauffer ledit moule à une température telle qu'elle provoque la fusion du matériau dudit coeur.

23. Procédé pour la fabrication d'un disque de frein (8) en matériau composite obtenu à l'aide du procédé selon les revendications 20 à 22, ledit procédé comprenant également l'étape de pyrolyse.

24. Procédé pour la fabrication d'un disque de frein (8) en matériau composite obtenu à l'aide du procédé selon les revendications 20 à 23, ledit procédé comprenant également l'étape de silicification.

25. Procédé pour la fabrication d'un disque de frein (8) en matériau composite obtenu à l'aide du procédé selon les revendications 20 à 24, ledit procédé comprenant également l'étape de finition de surface dudit disque.

26. Procédé pour la fabrication d'un disque de frein (8) en matériau composite obtenu à l'aide du procédé selon les revendications 20 à 25, dans lequel ledit coeur (20) est en un matériau qui fond.

27. Procédé pour la fabrication d'un disque de frein (8) en matériau composite obtenu à l'aide du procédé selon les revendications 20 à 25, dans lequel ledit coeur est en un matériau métallique.

28. Procédé pour la fabrication d'un disque de frein (8) en matériau composite obtenu à l'aide du procédé selon les revendications 20 à 25, dans lequel ledit coeur (20) est en un matériau métallique qui fond à une température inférieure à la température de pyrolyse.

29. Procédé pour la fabrication d'un disque de frein (8) en matériau composite obtenu à l'aide du procédé selon les revendications 20 à 25, dans lequel ledit coeur est en un alliage métallique susceptible de fondre à une température comprise entre 150 et 450° C.

30. Disque de frein (8) en matériau composite, muni de deux plaques de rotor (12) ayant un axe prédéterminé, et obtenu à l'aide d'un procédé selon l'une des revendications 20 à 29.

31. Procédé pour former une bande de freinage à l'aide d'un ensemble de coeur (4) selon les revendications 1 à 18, dans lequel ledit coeur forme une bande de freinage (8) avec un bord extérieur muni d'ouvertures correspondant aux conduits de ventilation et un bord intérieur comportant des sièges pour renfermer des dents correspondantes d'un moyeu de disque de frein.

32. Bande de freinage (8) obtenue à l'aide d'un procédé selon la revendication 31.
